## Europäisches Patentamt

## European Patent Office

## Office européen des brevets

(11) Veröffentlichungsnummer: **0 141 187**
**B1**

(12) # EUROPÄISCHE PATENTSCHRIFT

(45) Veröffentlichungstag der Patentschrift:
16.03.88

(21) Anmeldenummer: 84110845.9

(22) Anmeldetag: 12.09.84

(51) Int. Cl.⁴: **B 32 B 15/08,** H 01 F 1/18, H 02 K 1/04 // C09J7/02

(54) Blech für lamellierte Eisenkerne.

(30) Priorität: 14.09.83 DE 3333155

(43) Veröffentlichungstag der Anmeldung:
15.05.85 Patentblatt 85/20

(45) Bekanntmachung des Hinweises auf die Patenterteilung:
16.03.88 Patentblatt 88/11

(84) Benannte Vertragsstaaten:
AT BE DE FR GB IT SE

(56) Entgegenhaltungen:
CH-A-413 188
CH-A-497 978
DE-C-852 709
US-A-3 029 403
US-A-4 103 195

PATENT ABSTRACTS OF JAPAN, unexamined applications, E-field, vol. 6, no. 128, 14. Juli 1982, THE PATENT OFFICE JAPANESE GOVERNMENT, Seite 149 E 118
CHEMICAL ABSTRACTS, vol. 81, no. 10, 9. September 1974, Columbus, Ohio, USA, Seite 48, Zusammenfassung-Nr. 50 665p

(73) Patentinhaber: **Stahlwerke Bochum AG, Castroper Strasse 228, D-4630 Bochum (DE)**

(72) Erfinder: **Behringer, Jürgen, Dr., Bergstrasse 101, D-4630 Bochum (DE)**
Erfinder: **Syllwasschy, Wolfgang, Hustadtring 77, D-4630 Bochum (DE)**
Erfinder: **Pluciniczak, Hans- Friedrich, Castroper Strasse 225, D-4630 Bochum (DE)**
Erfinder: **Loley, Franz, Dr., Sindelargasse 56, A-1100 Wien (AT)**

(74) Vertreter: **Patentanwaltsbüro Cohausz & Florack, Postfach 14 01 47, D-4000 Düsseldorf 1 (DE)**

## Beschreibung

Die Erfindung bezieht sich auf ein Blech, insbesondere Elektroblech, zur Herstellung von lamellierten Eisenkernen für Generatoren, Motoren, Transformatoren o.dgl., bei denen das ein- oder beidseitig mit einer dünnen Schicht aus einem vorgetrockneten zweistufig aushärtbaren Klebstoff mit einem darin eingebrachten faserförmigen Füllmaterial versehen ist. Die Erfindung umfaßt ferner ein Verfahren zur Herstellung eines solchen Elektroblechs.

Bei der Fertigung von lamellierten Eisenkernen werden die dafür vorgesehenen Bleche aufeinandergestapelt und mittels einer Beschichtung zur Verminderung der Wirbelstromverluste voneinander getrennt, indem die Bleche in der Regel vorab einseitig oder auch beidseitig beschichtet werden. Diese Beschichtung kann beispielsweise ein Lack, d.h. ein ausgehärteter Kunstharzlack oder eine anorganische Phosphatbeschichtung, eine sogenannte Bonder-Schicht, sein. Grundsätzlich ist man bei dieser Herstellung von lamellierten Eisenkernen bestrebt, für das betreffende Lamellenpaket einen möglichst großen Stapelfaktor (Eisenvolumen pro Paketvolumen) zu erreichen, d.h., daß man eine möglichst geringe Beschichtungsdicke zwischen den Blechen wählen muß. Anschließend werden die aufeinandergestapelten Bleche beispielsweise durch ein Vernieten oder Verschweißen miteinander verbunden, um das Lamellenpaket gegenüber mechanischer Beanspruchung zu sichern, wie sie in der Praxis aufgrund von dynamischen Schwingungen auftritt, die durch magnetische Wechselfelder erzeugt werden.

Um das Lamellenpaket gegenüber mechanischer Beanspruchung widerstandsfähig zu machen, ein Vernieten oder Verschweißen der zu dem Lamellenpaket zusammengestellten und aufeinandergestapelten Bleche jedoch zu vermeiden, ist es bereits bekannt, die Bleche vorab einseitig oder auch beidseitig mit Klebstoff zu beschichten, und zwar mit einem aushärtbaren Klebstoff, der in flüssiger Form als Film auf die zu verklebende Fläche aufgetragen wird. Der Klebstoff kann bei niedrigen Temperaturen (Raumtemperatur bis ca. 150°C) vorgetrocknet werden, wobei er in diesem Zustand keine Klebewirkung besitzt. Aus dem vorgetrockneten Zustand kann der Klebstoff bei höherer Temperatur wieder weich gemacht werden (plastomerer Zustand), wonach er unter Druck bei der erhöhten Temperatur im Bereich von ca. 130 bis 250°C duroplastisch aushärtet. Nach erfolgter Abkühlung auf Raumtemperatur unter Aufrechterhaltung der Druckeinwirkung entfaltet der Klebstoff dann die volle Klebewirkung.

Da die vorgetrocknete Klebstoffschicht bei Raumtemperatur keine Klebewirkung ausübt, kann das Beschichten und Vortrocknen auf dem bandförmigen Material durchgeführt werden, bevor es zu Coils aufgewickelt und der Fertigung der Eisenkerne zugeführt wird. Dort werden dann aus dem bandförmigen Material die für das Lamellenpaket gewünschten Bleche ausgestanzt und zu Stapeln zusammengestellt. Durch ein anschließendes Verpressen der Bleche bzw. des Lamellenpaketes unter hohem Druck und gleichzeitiger Erwärmung bis auf die Aushärtetemperatur findet nach dem Erweichen und Aushärten des auf die Bleche einseitig oder auch beidseitig aufgetragenen Klebstoffs das Verkleben statt. Dabei liegt die Aushärtetemperatur in der Regel höher als die Temperatur, bei der der in flüssiger Form aufgetragene Klebstoff getrocknet wurde. Die Aushärtezeit ist hierbei erfahrungsgemäß ein mitbestimmender Faktor. Nach dem Aushärten wird das Lamellenpaket unter Aufrechterhaltung der Druckeinwirkung bis auf Raumtemperatur abgekühlt.

Bei ausschließlich mit dem Klebstoff beschichteten Blechen hat es sich als nachteilig erwiesen, daß eine metallische Berührung der Bleche in dem Lamellenpaket nicht immer vermieden werden kann, da die Beschichtung beim Verpressen und gleichzeitigen Aufschmelzen des Klebstoffs mit zunehmender Temperatur weicher und somit von den sich gegebenenfalls in der Blechoberfläche befindlichen erhabenen Stellen weggedrückt wird. Im verklebten Zustand führt dies nicht nur zu ansteigenden Wirbelstromverlusten, sondern beeinträchtigt auch die Haftfestigkeit der Klebeverbindung. Zu den Unebenheiten der Blechoberfläche, die das Durch- bzw. Wegdrücken des Klebstoffs verursachen, gehören Profil- und Dickenabweichungen, Verwerfungen, Oberflächenfehler wie Pickel und Kratzer, der Stanzgrat und selbst die Rauheit der Blechoberfläche. Schwierigkeiten haben sich insbesondere beim Verkleben größerer Lamellenpakete eingestellt, zum Beispiel beim Verkleben von Eisenkernen für Transformatoren oder von Statorpaketen für Generatoren.

Ein weiterer Nachteil der ausschließlich mit dem Klebstoff beschichteten und vorgetrockneten Bleche, die zu einem Lamellenpaket zusammengestellt werden, besteht darin, daß der beim Verpressen seitlich austretende und ausgehärtete Klebstoff nachträglich mit beträchtlichem Aufwand mechanisch entfernt werden muß. Zwar kann dies beispielsweise durch ein Abschleifen erfolgen, jedoch muß der dabei entstehende metallische Grat anschließend in einem weiteren Arbeitsgang entfernt werden. Versuche, das Austreten des Klebstoffs durch schlagartige Druckeinwirkung zu verhindern, waren nicht erfolgreich, weil die Qualität der Klebeverbindung in erheblichem Maße auch von der Dauer der Druckeinwirkung abhängt. Zum anderen sind schlußgeglühte Elektrobleche gegenüber Schlag und Stoß empfindlich und zwar um so mehr, je hochwertiger die Bleche sind. Die Maßnahme der schlagartigen Druckeinwirkung beim Verpressen der Bleche kann daher nicht benutzt werden, um ein Austreten des Klebstoffs aus dem Lamellenpaket zu verhindern.

Andererseits ist es zur Verbesserung der magnetischen Eigenschaften eines aus einzelnen Blechen hergestellten lamellierten Eisenkernes für Transformatoren, Motoren, Generatoren o.dgl. aus der US-A-3 029 403 bereits bekannt, die einzelnen Bleche auf beiden Seiten nicht nur mit dem Klebstoff allein, sondern mit einer aus dem Klebstoff und einem Füllmaterial bestehenden Mischung zu beschichten und anschließend zu trocknen. Das Füllmaterial besteht dabei aus einer Vielzahl von kugelförmigen, festen, elektrisch nicht leitenden Teilchen. Vorzugsweise sind die Teilchen Glaskugeln mit einem einheitlichen Durchmesser von ca. 25,µm. Die derart beschichteten Bleche werden zu einem Lamellenpaket aufeinander gestapelt und anschließend durch ein Verpressen der Bleche bzw. des Paketes unter Druck und gleichzeitiger Erwärmung miteinander verklebt.

Wie die versuchsweise Erprobung dieses vorbekannten Verfahrens gezeigt hat, können jedoch die bereits genannten Nachteile und Schwierigkeiten aufgrund von Verwerfungen, Oberflächenfehlern und selbst der Rauheit der Blechoberfläche auch mit Hilfe dieses Verfahrens nicht überwunden werden. Es wurde festgestellt, daß es nach wie vor in dem fertigen Lamellenpaket zu einer metallischen Berührung der Bleche untereinander kommt. Ferner hat es sich bei der Versuchsweisen Herstellung der beschichteten und vorgetrockneten Bleche als besonders schwierig erwiesen, eine homogene Mischung aus dem Klebstoff und den kugelförmigen Teilchen herzustellen und insbesondere aufrechtzuerhalten. Sowohl in der flüssigen Phase des Klebstoffs beim Beschichten der Bleche als auch in der thermoplastischen Phase beim Verpressen und Verkleben können die kugelförmigen, freibeweglichen Teilchen in der Klebstoffschicht wandern und den Ünebenheiten in der Blechoberfläche, beispielsweise den Rauheitsspitzen, ausweichen.

Dieser wesentliche Nachteil des vorbekannten Verfahrens könnte nur dann mit Sicherheit vermieden werden, sofern der Durchmesser der festen, kugelförmigen Teilchen wesentlich größer als alle denkbaren Unebenheiten in der Blechoberfläche gewählt wird. Daraus würde sich aber ein unbefriedigender Stapelfaktor ergeben, d.h. ein zu großer unerwünschter Abstand zwischen den einzelnen Blechen in dem aus den Blechen verklebten Lamellenpaket.

Alle deise Nachteile treffen sinnemäß anch für die in der US-A-4103195 beschriebene Lösung zu.

Insgesamt hat sich gezeigt, daß bei der Herstellung lamellierter Eisenkerne durch Verkleben aufeinandergestapelter Bleche von besonders großflächigem Format, beispielsweise Tragmagnetblech für Langstatorantriebe in der Magnetschwebetechnik, Stator- und Rotorendbleche großer Elektromaschinen oder Jochbleche von Großtransformatoren, auf eine Doppelbeschichtung nicht verzichtet werden kann,

wenn die Wirbelstromverluste auf das erforderliche Maß reduziert werden sollen. Bei der Doppelbeschichtung werden die Bleche zunächst ein- oder beidseitig mit einer konventionellen Elekroblechbeschichtung vom Typ eines ausgehärteten Kunstharzlacks oder einer Bonderschicht versehen: Auf diese Schicht wird dann der Klebstoff in flüssiger Form aufgetragen und getrocknet. Von den möglichen Doppelbeschichtungen hat lediglich der ausgehärtete Kunstharzlack in Kombination mit dem darauf aufgetragenen Klebstoff zufriedenstellende Ergebnisse im Hinblick auf die angestrebte Verringerung der Wirbelstromverluste gebracht. Abgesehen von den wesentlich höheren Kosten für die Durchführung des Verfahrens der Doppelbeschichtung besteht der wesentliche Nachteil dieses Verfahrens darin, daß die Doppelbeschichtung im allgemeinen nur in zwei getrennten Arbeitsgängen durchgeführt werden kann. Dies ist beispielsweise auch dann der Fall, wenn die eine Seite des bandförmigen Materials bzw. Blechs nur mit dem Klebstoff und die andere Seite nur mit einer konventionellen Elektroblechbeschichtung versehen wird.

Ein weiterer Nachteil der Doppelbeschichtung kann auch aus der schlechten Haftung des Klebstoffs auf der konventionellen Elektroblechbeschichtung erwachsen. Dies wirkt sich dahingehend aus, daß man bezüglich der Klebeverbindung der Bleche untereinander qualitative Abstriche in Kauf nehmen muß. Zum Teil kann man diese Nachteile wiederum nur dadurch kompensieren, daß beispielsweise noch zusätzlich kostspielige Haftvermittler eingesetzt werden müssen.

Aus der CH-A-413 188 ist ein Verfahren zum Verkleben von Metallen, insbesondere von dicken Metallgegenständen unter Verwendung von Zweikomponenten-Metallklebstoffen und von Fasern bekannt.

Die Schrift befaßt sich mit dem Problem, einen normalerweise in der Kälte rasch härtenden Reaktionsklebstoff zu verwenden: Dabei macht das Einbringen des die Härtung auslösenden Beschleunigers in den Klebstoff Schwierigkeiten, weil der Beschleuniger beim Kontaktieren mit dem Klebstoff Härtungsreaktion auslöst und beschleunigt. Werden beide Stoffe auf das Blech aufgetragen, beginnt die Härtung schon während des Beschichtungsvorganges. Gelöst wird dieses Problem durch eine gleichmäßige Verteilung des Beschleunigers in der Schicht. Dazu werden mit dem Beschleuniger vorbehandelte Fasern in Form von Geweben oder Matten verwendet. Durch das Einbringen der vorbehandelten Gewebe bzw. Matten in die Schicht aus dem Reaktionskleber wird beim Klebevorgang eine gleichzeitige Auslösung des Härtungsvorganges über die gesamte Fläche erreicht, so daß die Klebeflächen normalerweise bei Raumtemperatur und in kurzer Zeit miteinander verbunden werden. Die bei diesem bekannten Verfahren eingesetzten Gewebe oder Matten werden ausschließlich zur gleichmäßigen Verteilung des die Härtungsreaktion auslösenden Beschleunigers verwendet. Damit werden bezüglich ihrer Dicke keine besonderen Anforderungen gestellt. Vielmehr werden zweckmäßigerweise beim Verkleben von insbesondere großflächigen und dicken Teilen gröbere und/oder dickere Gewebe verwendet. Ein Hinweis auf die Herstellung lamellierter Eisenkerne aus beschichteten Elektroblechen ist dieser Schrift nicht zu entnehmen. Bei lamellierten Eisenkernen kommt es dagegen auf dünne aber definierte Abstände zwischen benachbarten Blechen an.

Aus der in der CH-A-413 188 erwähnten DE-B-1 057 709 ist ein Verfahren zum Verkleben von Metallen von nahezu beliebiger Breite und Dicke bekannt, wobei außer einem an sich bekannten, durch chemische Reaktion verhärtenden Metallklebstoff zusätzlich ein Glasfasergewebe mitverwendet wird. Dadurch wird die Gefahr vermieden, daß der Klebstoff bei der Verklebung zwischen den zu verklebenden Teilen ausfließt. Außerdem wird eine gute Festigkeit bzw. Isolierung der Metallteile erzeugt. Es handelt sich aber auch hier nicht um ein Blech mit einer vorgetrockneten Klebstoffschicht.

Aus dem vorerwähnten Stand der Technik leitet sich nun die Aufgabe ab, ein Elektroblech zu schaffen, welches es ermöglicht, daß beim Verpressen des aus geschichteten Blechen aufgebauten Eisenkerns kein Klebstoff an den Rändern austritt und eine hohe mechanische Haftfestigkeit erzeugt wird, wobei sich Blechunebenheiten aus Profilfehlern und Oberflächenrauheiten nicht durchdrücken sollen, damit keine Kurzschlüsse entstehen, und daß es ferner gestattet, den erforderlichen Arbeitsaufwand beim Aufbau der lamellierten Eisenkerne erheblich zu reduzieren.

Erfindungsgemäß wird diese Aufgabe durch ein Blech der eingangs genannten Art gelöst, bei dem das faserförmige Füllmaterial ein netzartiges Stützskelett aus Gewebe oder Vliesstoff ist.

Durch das in der Klebstoffschicht verankerte netzartige Stützskelett in Form eines Gewebes oder Vliesstoffes wird erreicht, daß der Klebstoff auch beim Verkleben der Bleche zu einem Lamellenpaket festgehalten wird und nun nicht mehr seitlich aus dem Paket austreten kann. Auch können die Fasern des netzartigen Stützskelettes nicht mehr durch Blechunebenheiten weggedrückt werden, so daß es in dem Lamellenpaket zu keinen Berührungen der Bleche untereinander kommt. Zudem ist der Arbeitsaufwand beim Schichten der Bleche zur Herstellung des lamellierten Eisenkerns wesentlich geringer als bei den vorstehend erwähnten Verfahren der Doppelbeschichtung und der gemäß CH-A-413 188. Das erfindungsgemäße Elektroblech ist nämlich mit allen Mitteln zum abstandsgleichen Verbinden durch Kleben ausgestattet, so daß es genügt, das Blech in der gewünschten Kontur auszustanzen, zu schichten, zu pressen und in der Wärme den Klebstoff auszuhärten. Dabei findet das Verkleben erst statt, nachdem der Vorgang des Schichtens der Bleche zum Eisenkern abgeschlossen ist, gleichgültig wie lange dieser Vorgang dauert. Eine separate Handhabung einer Einlage, die auch noch getränkt werden muß, wie es bei dem aus der CH-A-413 188 bekannten Verfahren erforderlich ist, entfällt bei Verwendung des erfindungsgemäßen Elektroblechs zum Aufbau lamellierter Eisenkerne.

Vorzugsweise kann das Gewebe oder der Vliesstoff aus elastischen Fasern, vorzugsweise aus Polyesterfasern, bestehen. Dadurch wird die kleinste erreichbare Schichtdicke zwischen den Blechen in dem Lamellenpaket nicht durch den Durchmesser der kugelförmigen Teilchen bestimmt, wie dies im Falle der aus der US-A-3 029 403 bekannten Lösung der Fall ist, und auch nicht durch die Dicke der Fasern, wie bei einem Elektroblech mit der Glasfaser/Klebstoffschicht gemäß der US-A-4 103 195, sondern diese ergibt sich in vorteilhafter Weise aus der Elastizität bzw. Duktilität beim Verpressen der Bleche zu einem Lamellenpaket bei gleichzeitiger Wärmezufuhr. So können im Vergleich zu ausschließlich mit dem Klebstoff beschichteten Blechen, die zu einem Lamellenpaket zusammengestellt und verklebt werden, die annähernd gleich günstigen Stapelfaktoren erreicht werden, sofern die Dicke des Gewebes oder Vliesstoffes des aus elastischen Fasern bestehenden Stützskelettes allein vorzugsweise ca. 5 bis 15μm beträgt. Die Dicke der vorgetrockneten erfindungsgemäßen Beschichtung aus Gewebe oder Vliesstoff und Klebstoff beträgt vorzugsweise weniger als 30μm und liegt insbesondere im Bereich von 7 bis 20μm.

Nach dem erfindungsgemäßen Verfahren zur Herstellung von Elektroblechen wird das Band, aus dem später die Bleche geschnitten werden, zunächst vom Coil abgewickelt und mit dem Klebstoff in flüssiger Form beschichtet. Anschließend wird die von der Rolle abgewickelte Gewebe- oder Vliesstoffbahn in den noch nassen Klebstoff als Stützskelett eingebracht und bildet so in der nachfolgend im Trockenofen bei einer Temperatur bis ca. 150°C vorgetrockneten Klebstoffschicht das Stützskelett für die spätere Verklebung der lamellierten Eisenkerne unter Druck und Temperatur. So kann das Band in nur einem einzigen Arbeitsgang derart beschichtet werden, daß die nachfolgend daraus gestanzten und zu einem Paket zusammengestellten Bleche in ebenfalls nur einem Arbeitsgang verklebt werden können und in dem fertigen Lamellenpaket im vorgegebenen Abstand mit hoher Festigkeit verklebt vorliegen. Es wurde gefunden, daß die Haftung der vorgetrockneten, fasergestützten Klebstoffschicht auf dem Blech merklich, auf etwa das Eineinhalbfache, gesteigert werden kann, wenn anstelle eines kalten Bandes ein auch dicht unterhalb der Trocknungstemperatur vorgewärmtes bzw. noch warmes Band beschichtet wird.

Als Klebstoff eignen sich zweistufig wirkende Metallklebstoffe, die bei der Vortrocknung physikalisch trocknen und unter Druck bei erhöhter Temperatur aushärten, insbesondere ein phenolharzmodifizierter Polyesterurethan (Reaktionsprodukt eines phenolharzmodifizierten Polyesters und einem Di- oder Polyisocyanat) oder ein Bortrifluoridkatalisiertes Epoxidharzsystem.

Überraschenderweise wurde gefunden, daß verklebte Pakete aus erfindungsgemäßen Blechen bei Dauerschwingbeanspruchung, wie sie in der Praxis durch die magnetischen Wechselfelder oder dynamischen Belastungen auftreten, gute Dämpfungseigenschaften aufweisen und damit für bestimmte Einsatzzwecke eine zusätzliche Sicherheit bieten. Dieses Verhalten gibt einen Hinweis auf die Abhängigkeit der Dämpfungseigenschaften des verklebten Paketes von den elastischen Eigenschaften des als Stützskelett der Klebeverbindung verwendeten Faserstoffes.

Die Fasern, z. B. Zellulosefasern, Glasfasern, Schlackenfasern, insbesondere elastische Fasern, wie Polyesterfasern, werden in Form von Gewebe oder Vliesstoff als Stützskelett eingesetzt: Geeignet ist vor allem Polyestervliesstoff mit geringem Flächengewicht, um die Schicht zwischen den Blechen dünn zu halten und damit übliche Füllfaktoren einstellen zu können. Nach diesem Verfahren wurden Schichtdicken nach dem Verpressen von weniger als 20μm erreicht.

Ferner hat sich gezeigt, daß die Stützwirkung des erfindungsgemäßen netzartigen Stützskelettes und die Einflußnahme auf die Festigkeit der Klebeverbindung dann besonders groß sind, wenn als Stützskelett eine Faserkombination aus 10 bis 40 %, vorzugsweise 20 bis 30 %, unbehandelten, teilverstreckten Bindefasern und aus 60 bis 90 %, vorzugsweise 70 bis 80 %, nach dem Spinnen der Fasern nochmals behandelten, mechanisch verstreckten Fasern auf Polyesterbasis verwendet wird. Dabei sollen bevorzugt die unbehandelten teilverstreckten Bindefasern und die unbehandelten verstreckten Fasern aus einem unterschiedlichen Material bestehen. Dies ist insbesondere dann der Fall, wenn die Fasern mit einer die Verhakung bzw. Verkettung der Fasern begünstigenden Knochenkontur entweder in überwiegend gestreckter Anordnung oder in Wirrlage thermisch verfestigt sind. Dabei bedeuten Fasern mit einer Knochenkontur Einzelfasern mit Verdickungen an ihren beiden Enden. Ferner ist eine Anordnung der Fasern vorteilhaft, bei der 70 bis 80 % der Fasern parallel und 20 bis 30 % der Fasern in einem Winkel zwischen 20° und 30° zur Vorzugsrichtung liegen.

Man kann dem Klebstoff auch Einzelfasern direkt zusetzen, z. B. durch Berieseln, elektrostatisches Beflocken oder Aufsprühen. Es hat sich gezeigt, daß das Stützskelett der erfindungsgemäßen Beschichtung die Klebewirkung des Klebstoffes nicht beeinträchtigt, sondern die Festigkeit der Klebeverbindung noch erhöht. Erfindungsgemäß ist dies insbesondere dann der Fall, wenn dem Klebstoff zusätzlich als Haftvermittler 0,01 - 2,0 % Acetanilid zugegeben wird. Sie entspricht mindestens der Klebewirkung des Klebstoffes zwischen Blechen, die ausschließlich mit dem vorgetrockneten Klebstoff einer Dicke in der Größenordnung von ca 5 μm beschichtet sind.

Das Verkleben von Blech mit der erfindungsgemäßen Beschichtung bringt insgesamt folgende Vorteile:
- Einhaltung eines definierten Abstandes zwischen den Blechlamellen,
- kein Durchdrücken von Blechunebenheiten aus Profilfehlern und Oberflächenrauheit im Druck- und Temperaturfeld der Verbackungsanordnung und weitgehende Sicherheit gegen Eisenschluß auch bei Oberflächenschäden wie Schalen, Pickel, Kratzer,
- verbesserte Aufnahme von Stranggrat in der Beschichtung beim Verpressen der Pakete,
- kein Austritt von Klebstoff beim Verpressen,
- hohe mechanische Haftfestigkeit der verklebten Lamellen.

Anhand der folgenden Beispiele wird die Erfindung näher erläutert.

**Beispiel 1**

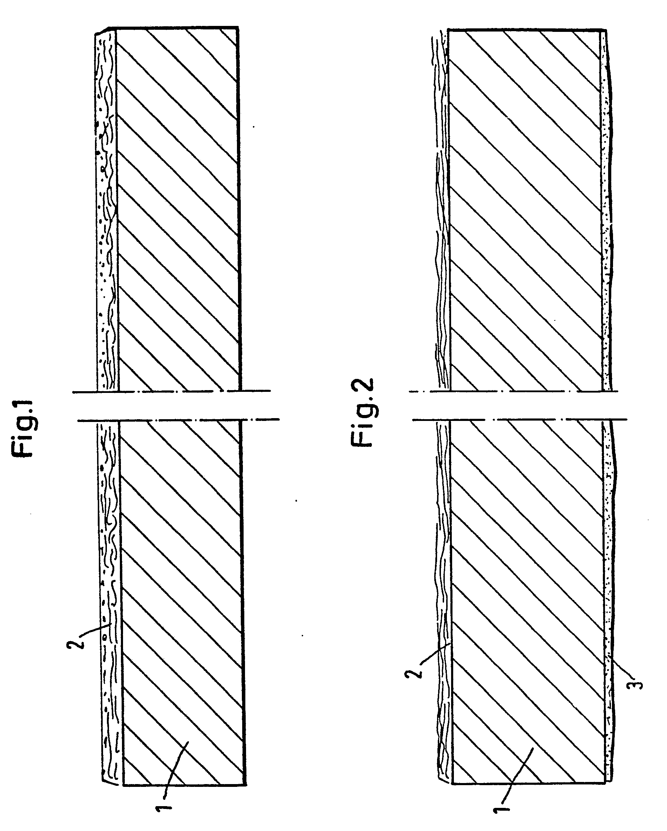

Kaltgewalztes Elektroblech, 0,5 mm dick, Ummagnetisierungsverlust $P_{1,0}$ nach DIN 46400 = 1,7 W/kg, wird in einer Walzenbeschichtungsanlage mittels Gummiwalze einseitig mit einem Klebstoff auf Basis von Polyvinylbutyral, OH-Gruppenhaltigem Polyester und Phenolharz mit einem latenten Härter, und zwar ein phenolverkapptes Triisocyanat, beschichtet. Der Klebstoff besitzt einen Festkörpergehalt von 21 % und eine Viskosität 4- DIN 52211 = 130 s. Die Naßfilmdicke beträgt 25 bis 30 μm. In diesen Naßfilm wird ein thermisch verfestigter Polyesterwirrfaservliesstoff mit einem Flächengewicht nach DIN 53854 von 12 g/m² ≙ ca. 30 μm kontinuierlich von einer Vorratsrolle eingelegt. Auf die so hergestellte Beschichtung wird mittels Auftragswalze eine weitere Klebstoffschicht in der Dicke aufgebracht, die die vollständige Durchtränkung des eingelegten Vliesstoffes von der Oberseite her gewährleistet, siehe Figur 1. Das beschichtete Blech wird in einem Trockenofen im Durchlaufverfahren eine Minute bei 150°C getrocknet. Nach der Trocknung beträgt die Schichtdicke ca. 12 bis 14 μm. Die Bleche werden auf Streifen von 30 x 100 mm geschnitten und gestapelt: Die so hergestellten Lamellenpakete werden bei einem Druck von 300 N/cm² und einer Temperatur von 210°C 120 Minuten verpreßt (Aufheizzeit 105 Minuten, Haltezeit 15 Minuten).

**Beispiel 2**

Kaltgewalztes Elektroblech, 0,65 mm dick, Ummagnetisierungsverlust $P_{1,0}$ nach DIN 46400 = 2,6 W/kg, wird in einer Walzenbeschichtungsanlage mittels Gummiwalzen zweiseitig mit einem Klebstoff auf der Basis von Epoxidharz mit einem latenten Härter eines Bortrifluoridkomplexes beschichtet: Der Klebstoff hat einen Festkörpergehalt von 40 % bei einer Viskosität 4-DIN 52211 = 100 s. Die Naßfilmdicke beträgt 20µm. In den nassen Klebstoff auf der Blechoberseite wird ein thermisch verfestigter Polyesterlängsfaservliesstoff mit einem Flächengewicht nach DIN 53854 von 9 g/m2 $\doteq$ ca. 22µm kontinuierlich von einer Vorratsrolle eingelegt. Die so aufgetragene Schicht wird in einem Heißluft-Schwebetrockner 50 s bei 140°C kontinuierlich getrocknet. Nach der Trocknung hat das beschichtete Blech auf der Oberseite (mit Stützskelett) ca. 14µm und auf der Unterseite ca. 8µm Schichtdicke, siehe <u>Figur 2.</u> Das mit den vorgetrockneten Beschichtungen versehene Blech ist stapel- und lagerfähig bei Temperaturen unter 60°C, es klebt bei der Lagerung nicht zusammen.

**Beispiel 3**

Kaltgewalztes Elektroblech, 0,5 mm dick, Ummagnetisierungsverlust $P_{1,0}$ nach DIN 46400 = 3,6 W/kg, wird wie im Beispiel 1 beschichtet. Der dort genannte Klebstoff enthält zusätzlich Acetanilid als Haftvermittler in einem Anteil von 0,5 Ma-% bezogen auf den nassen Klebstoff. Die Naßfilmdicke beträgt 25 bis 30µm. In diesen Naßfilm wird ein thermisch verfestigter quergelegter Polyesterlängs- faservliesstoff mit einem Flächengewicht nach DIN 53854 von 12 g/m2 = ca. 30µm eingelegt. Trocknung und Weiterverarbeitung erfolgen wie im Beipiel 1 beschrieben.

In der Zeichnung ist im Querschnitt das Blech 1 dargestellt, auf dessen Oberflächen einseitig die Beschichtung 2 als faserstoffgestützte, vorgetrocknete Klebstoffschicht aufgebracht ist, <u>Figur 1,</u> oder auf der einen Blechoberfläche Beschichtung 2 wie vorstehend beschrieben und auf der gegenüberliegenden Oberfläche die Beschichtung 3, bestehend aus einer Klebstoffschicht ohne Stützskelett, <u>Figur 2.</u>

**Patentansprüche**

1. Blech zur Herstellung von lamellierten Eisenkernen für Generatoren, Motoren, Transformatoren o. dgl., das ein-oder beidseitig mit einer dünnen Schicht aus einem vorgetrockneten zweistufig aushärtbaren Klebstoff mit einem darin eingebrachten faserförmigen Füllmaterial versehen ist, <u>dadurch gekennzeichnet,</u> daß das faserförmige Füllmaterial ein netzartiges Stützskelett aus Gewebe oder Vliesstoff ist.

2. Blech nach Anspruch 1, <u>dadurch gekennzeichnet,</u> daß das Stützskelett aus elastischen Fasern besteht.

3. Blech nach Anspruch 2, <u>dadurch gekennzeichnet,</u> daß die Fasern Polyesterfasern sind.

4. Blech nach einem der Ansprüche 1 bis 3, <u>dadurch gekennzeichnet,</u> daß das netzartige Stützskelett aus 10 - 40 % unbehandelten teilverstreckten Fasern als Bindefasern und aus 60 - 90 % behandelten mechanisch verstreckten Fasern besteht.

5. Blech nach Anspruch 4, <u>dadurch gekennzeichnet,</u> daß die unbehandelten teilverstreckten Bindefasern und die behandelten verstreckten Fasern aus einem unterschiedlichen Material bestehen.

6. Blech nach einem der Ansprüche 1 bis 5, <u>dadurch gekennzeichnet,</u> daß die Fasern des Stützskeletts Knochenkontur besitzen und in überwiegend gestreckter Anordnung oder in Wirrlage thermisch verfestigt sind.

7. Blech nach einem der Ansprüche 1 bis 6, <u>dadurch gekennzeichnet,</u> daß der Klebstoff zusätzlich 0,01 bis 2,0 % Acetanilid als Haftvermittler enthält.

8. Blech nach einem der Ansprüche 1 bis 7, <u>dadurch gekennzeichnet,</u> daß die Schicht höchstens 30µm dick ist:

9. Blech nach Anspruch 8, <u>dadurch gekennzeichnet,</u> daß die Schicht 7 bis 20µm dick ist.

10. Verfahren zur Herstellung von Elektroblech, nach einem der Ansprüche 1 bis 9, <u>dadurch gekennzeichnet,</u> daß auf vom Coil abgewickeltes bandförmiges Elektroblech ein Naßfilm eines zweistufig aushärtbaren Klebstoffs aufgetragen wird, daß in den Klebstoff ein Gewebe oder Vliesstoff als netzartiges Stützskelett vom Band eingebracht wird, und daß unmittelbar anschließend die Klebstoffschicht getrocknet wird.

11. Verfahren nach Anspruch 10, <u>dadurch gekennzeichnet,</u> daß das Band vor dem Aufbringen der Klebstoffschicht auf eine Temperatur dicht unterhalb der Trocknungstemperatur des Klebstoffs erwärmt wird.

**Claims**

1. Metal sheet for the production of laminated iron cores for generators, motors, transformers or the like, which metal sheet is provided, on one side or on both sides, with a thin layer of a predried adhesive, hardenable in two stages, with a fibrous filling material introduced therein, characterized in that the fibrous filling material is a lattice-like supporting skeleton of fabric or nonwoven material.

2. Metal sheet according to claim 1, characterized in that the supporting skeleton consists of elastic fibres.

3. Metal sheet according to claim 2, characterized in that the fibres are polyester fibres.

4. Metal sheet according to one of claims 1 to 3, characterized in that the lattice-like supporting skeleton consists of 10 - 40 % untreated, partially stretched fibres as binding fibres and of 60 - 90 % treated, mechanically stretched fibres.

5. Metal sheet according to claim 4, characterized in that the untreated, partially stretched binding fibres and the treated, stretched fibres consist of a different material.

6. Metal sheet according to one of claims 1 to 5, characterized in that the fibres of the supporting skeleton possess a bone contour and are thermally consolidated in a predominantly stretched arrangement or in an irregular position.

7. Metal sheet according to one of claims 1 to 6, characterized in that the adhesive additionally contains 0.01 to 2.0 % acetanilide as adhesion promoter.

8. Metal sheet according to one of claims 1 to 7, characterized in that the layer is at most 30 µm thick.

9. Metal sheet according to claim 8, characterized in that the layer is 7 to 20 µm thick.

10. Process for the production of electrical metal sheet, according to one of claims 1 to 9, characterized in that a wet film of an adhesive hardenable in two stages is applied to band-like electrical metal sheet unwound from the coil, in that a fabric or nonwoven material is introduced into the adhesive as lattice-like supporting skeleton of the band, and in that the adhesive layer is dried directly thereafter.

11. Process according to claim 10, characterized in that before application of the adhesive layer the band is heated to a temperature slightly below the drying temperature of the adhesive.

**Revendications**

1.- Tôle pour la fabrication de noyaux de fer feuilletés pour générateurs, moteurs, transformateurs ou similaires, qui est pourvue sur une face ou les deux faces d'une couche mince en une colle préséchée à deux étages durcissable avec un matériau de charge en forme de fibres introduit dedans, caractérisée par le fait que le matériau de charge est un squelette de support en forme de réseau en tissu ou étoffe nappée.

2.- Tôle selon la revendication 1, caractérisée par le fait que le squelette de support est en fibres élastiques.

3.- Tôle selon la revendication 2, caractérisée par le fait que les fibres sont des fibres polyester.

4.- Tôle selon l'une des revendications 1 à 3, caractérisée par le fait que le squelette de support en forme de réseau est constitué de 10 à 40 % de fibres de liaison non traitées partiellement étirées et de 60 à 90 % de fibres à base polyester, traitées étirées mécaniquement.

5.- Tôle selon la revendication 4, caractérisée par le fait que les fibres non traitées partiellement étirées et les fibres non traitées étirées sont en des matériaux différents.

6.- Tôle selon l'une des revendications 1 à 5, caractérisée par le fait que les fibres du squelette de support ontune forme d'os et sont renforcées thermiquement à l'état d'étirage prépondérant ou à l'état emmêlé.

7.- Tôle selon l'une des revendications 1 à 6, caractérisée par le fait que la colle contient en outre 0,01 à 2,0 % d'acétanilide en tant qu'agent de pontage.

8.- Tôle selon l'une des revendications 1 à 7, caractérisée par le fait que la couche à une épaisseur d'au plus 30 µm.

9.- Tôle selon la revendication 8, caractérisée par le fait que la couche a une épaisseur de 7 à 20 µm.

10.- Prccédé pour la fabrication d'une tôle selon l'une des revendications 1 à 9, caractérisé par le fait qu'on dépose sur une tôle électrique en forme de bande déroulée de bobine une colle durcissable à deux étages, qu'on introduit depuis la bande dans la colle un tissu ou une étoffe nappée formant un squelette de support en forme de réseau, et on sèche la couche de colle immédiatement après.

11.- Procédé selon la revendication 10, caractérisé par le fait que la bande, avant le dépôt de la couche de colle, est échauffée à une température juste inférieure à la température de séchage de la colle.

# Fig.1

# Fig.2

0 141 187